# DEMANDE DE BREVET EUROPEEN

(11) **EP 2 963 525 A1**
(43) Date de publication de la demande: **06.01.2016**
(21) Numéro de dépôt: 15174331.7
(22) Date de dépôt: 29.06.2015
(51) Int. Cl.: G06F 3/02, G06F 3/01

(54) **DISPOSITIF PERMETTANT DE FACILITER L'ENSEIGNEMENT DE LA LANGUE AMHARIQUE ET D'EN NORMALISER L'ÉCRITURE**

(30) Priorité: 02.07.2014 FR 1456324; 17.12.2014 FR 1462579
(71) Demandeur: ADN Access Data Networks, 75008 Paris (FR)
(72) Inventeur: TUGENDHAT, Gilles, 75017 Paris (FR)
(74) Mandataire: Cabinet HERRBURGER

(57) **Abrégé**

Dispositif permettant de faciliter l'enseignement de la langue amharique et d'en normaliser l'écriture constitué par un clavier informatique comportant un ensemble de touches, à savoir :
- un premier groupe de n touches biunivoques correspondant aux n consonnes les plus fréquentes ou consonnes principales se présentant sous l'ordre 6,
- un second groupe de a touches biunivoques, avec a ≤ n correspondant respectivement à a consonnes principales se présentant sous l'ordre 1,
- un troisième groupe de touches biunivoques correspondant respectivement aux consonnes autres que les consonnes principales ou consonnes secondaires se présentant sous l'ordre 6, et
- un pavé de huit touches muettes correspondant respectivement aux huit ordres, l'actionnement de l'une des touches muettes de ce pavé préalablement à celui d'une touche biunivoque correspondant à une consonne principale ou à une consonne secondaire entraînant l'impression de cette consonne principale ou secondaire sous l'ordre correspondant à cette couche muette.

## Description

La présente invention a pour objet un dispositif permettant de faciliter l'enseignement de la langue amharique et d'en normaliser l'écriture.

Un tel dispositif est plus précisément constitué par un clavier informatique adapté à la communication et à l'impression de l'écriture amharique.

Ce clavier informatique comporte de manière classique un ensemble de touches ; l'actionnement de l'une de ces touches entraine la transmission à un ordinateur d'un signal codé spécifique permettant l'impression d'un caractère alphanumérique associé à celle-ci.

Un tel clavier constitue ainsi un périphérique d'entrée d'un ordinateur et est combiné à un réseau matriciel constitué par un ensemble de lignes et de colonnes qui permet d'identifier chacune des touches.

L'actionnement d'une touche entraine plus précisément l'établissement d'un contact électrique entre une ligne et une colonne du réseau matriciel de nature à permettre la transmission à l'ordinateur, via un micro contrôleur du signal codé identifiant le caractère alphanumérique associé à cette touche puis l'impression de ce caractère.

Dans un tel système, les caractères sont stockés selon un encodage.

L'alphabet latin qui est le plus répandu utilise un encodage à 7 bits qui laisse un bit accessible pour les caractères spéciaux dont les caractères amhariques font partie.

Historiquement chaque langue à caractères spéciaux a créé son encodage (du type ISO).

Afin de pallier l'absence d'homogénéité et les problèmes de transfert d'information, un encodage général a été défini en 1996 qui fixe une fois pour toutes l'encodage des caractères spéciaux de toutes les langues : il s'agit de l'UTF 8.

Il existe actuellement sur le marché plusieurs types de claviers informatiques qui ont été conçus pour l'impression des écritures propres à différentes langues tels que par exemple le clavier QWERTY pour les pays anglophones ou le clavier AZERTY pour les pays francophones.

Ces claviers sont toutefois en règle générale adaptés à des écritures alphabétiques dans lesquelles les symboles représentent des sons ou des phonèmes et il est plus difficile de concevoir des claviers adaptés aux écritures syllabaires dans lesquelles les symboles représentent des syllabes ou aux écritures alpha syllabaires qui sont situées à michemin entre les écritures alphabétiques et les écritures syllabaires et dont fait partie l'écriture amharique.

Or, il n'existe actuellement pas de clavier adapté à l'impression de l'écriture amharique de nature à être universellement utilisé de manière satisfaisante.

La langue amharique est une langue sémitique non normalisée actuellement parlée par 30 millions d'habitants en Ethiopie dont la population est à 70 % touchée par l'illettrisme, et qui constitue le véhicule administratif.

Cette langue est représentée communément par de l'ordre de deux-cent-soixante-dix caractères qui comportent trente quatre racines consonantiques ou consonnes pouvant chacune se présenter sous huit états ou ordres principaux, dont sept correspondent à des déclinaisons vocaliques de type voyelles simples tandis que le huitième correspond à une diphtongue.

Les caractères de l'écriture amharique sont rassemblés sur le tableau figurant en annexe 1.

Pour simplifier dans le cadre de cet exposé les consonnes ayant une sonorité équivalente ou doublons ont été rassemblées de sorte que l'on a considéré que l'alphabet amharique ne comporte que 29 consonnes pouvant chacune se présenter sous huit ordres.

Les caractères de l'écriture amharique ainsi simplifiée sont rassemblés sur le tableau 1 bis.

Les premiers textes écrits en amharique datent du V^{ème} siècle, mais cette écriture n'est aujourd'hui maitrisée que par les seuls intellectuels voire érudits ce qui contribue dans une large mesure au très faible niveau d'éducation de cette population, ce d'autant plus que l'étude de la langue amharique a révélé un grand décalage entre l'alphabet et la pratique de la langue.

Pour remédier à ce fléau il serait très utile de pouvoir disposer d'un dispositif permettant de faciliter l'enseignement de la langue amharique et parallèlement de nature à permettre d'en normaliser l'écriture, en particulier d'un clavier informatique adapté à l'impression de l'écriture amharique.

Un tel clavier constituerait en effet un outil facilement accessible aux enfants et adultes analphabètes et de ce fait apte à faciliter l'enseignement de la langue amharique, et donc à permettre de lutter efficacement contre l'illettrisme.

Pour parvenir à ce but, on a déjà eu l'idée de concevoir des claviers basés sur le clavier QWERTY sur lesquels les caractères de l'écriture amharique sont artificiellement décomposés phonétiquement et peuvent être reproduits et imprimés suite à l'actionnement simultané ou consécutif d'au moins deux touches.

Ces claviers sont basés sur un logiciel particulier dit « Power Gueuze » non standardisé qui rend à titre d'exemple impossible l'envoi de mails.

L'encodage est en effet fait sous format ISO et ne permet donc pas de transmettre des fichiers modifiables.

L'usage d'un clavier de ce type est de plus réservé à une élite lettrée et à des « typists » formés spécialement et qui maîtrisent des centaines de combinaisons non afiichées ; il serait donc souhaitable de pouvoir proposer un clavier informatique alpha syllabaire adapté à l'écriture amharique accessible au plus grand nombre et en particulier aux enfants, et permettant de reproduire une importante proportion des caractères de cette écriture en n'actionnant qu'une seule touche.

Un tel clavier aurait en effet de multiples avantages parmi lesquels on peut noter la possibilité d'un enseignement rapide de l'amharique et des usages Internet, la création d'un véhicule de normalisation de la langue amharique pour l'Ethiopie ou encore la généralisation d'un accès communautaire en amharique sur le net.

La présente invention a pour objet de parvenir à ce but en proposant un dispositif permettant de faciliter l'enseignement de la langue amharique et d'en normaliser l'écriture constitué par un clavier informatique du type susmentionné.

La conception de ce clavier est basée sur une analyse statistique fine de la langue et de l'écriture amharique ayant porté sur onze millions de caractères dans cette écriture et ayant confirmé le décalage entre la langue écrite et la langue parlée.

Les résultats de cette analyse sont regroupés dans l'annexe 2 qui répertorie les deux-cent-vingt-neuf caractères de l'écriture amharique en les définissant chacun par la consonne associée et l'ordre sous lequel cette consonne se présente et classe ces caractères en fonction du nombre et de la fréquence de leurs occurrences.

Cette analyse a permis de constater que parmi les deux-cent-vingt-neuf caractères de la langue amharique, quarante-six caractères regroupaient près de 77 % des occurrences.

Une analyse de ces quarante-six caractères a de plus permis de découvrir qu'ils ne regroupaient que dix-sept consonnes ou consonnes majeures se présentant surtout sous l'ordre 6, plus rarement sous les ordres 3 et 4 et encore plus rarement sous les ordres 3 et 7.

Cette étude statistique a ensuite été complétée, toujours à partir des mêmes onze millions de caractères, par une analyse plus fine dont les résultats sont regroupés dans l'annexe 3 qui répertorie les vingt-neuf consonnes de l'écriture amharique, quelque soit l'ordre sous lequel elles se présentent et classe ces consonnes là encore en fonction du nombre et de la fréquence de leurs occurrences.

Or, cette seconde étude a permis de constater que les dix-sept consonnes majeures regroupaient 92,90 % des occurrences alors que les douze autres consonnes ou consonnes mineures n'en regroupaient que 7,10%.

Conformément à l'invention, cette étude statistique préalable a permis de concevoir un clavier permettant de reproduire une proportion très importante (de l'ordre de 80 %) des caractères de l'écriture amharique en n'actionnant qu'une seule touche, alors que la reproduction des caractères restants (de l'ordre de 20 %) ne nécessite que l'actionnement successif de deux touches, dans le respect de l'organisation de la langue, et dans une approche intuitive de celle-ci.

Selon un premier mode de réalisation de l'invention, un tel clavier amharique est caractérisé en ce qu'il comporte :
- un premier groupe de n touches biunivoques correspondant aux n consonnes les plus fréquentes ou consonnes principales se présentant sous l'ordre 6,
- un second groupe de a touches biunivoques avec a ≤ n correspondant respectivement à a consonnes principales se présentant sous l'ordre 1,
- un troisième groupe de touches biunivoques correspondant respectivement aux consonnes autres que les consonnes principales ou consonnes secondaires se présentant sous l'ordre 6, et
- un pavé de huit touches muettes correspondant respectivement aux huit ordres.

Ces touches sont dires muettes dans la mesure où elles ont un rôle de composition dans la création du caractère : en effet, l'impulsion de la touche seule ne produit pas de caractère alors que sa combinaison avec une touche biunivoque compose la consonne correspondant à cette touche et l'ordre sélectionné.

L'actionnement de l'une des touches muettes de ce pavé de huit touches préalablement à l'actionnement d'une touche biunivoque correspondant à une consonne principale ou à une consonne secondaire entraîne donc l'impression de cette consonne principale ou secondaire sous l'ordre correspondant à cette touche muette.

Selon ce premier mode de réalisation de l'invention, n est en règle générale compris entre 15 et 20 et est de préférence égal à 17.

a est quant à lui en règle générale compris entre 12 et 20 et est de préférence égal à 16.

Selon ce premier mode de réalisation de l'invention, le clavier amharique comporte également un quatrième groupe de b touches biunivoques, avec b ≤ a correspondant respectivement à b consonnes principales se présentant sous l'ordre 4.

Conformément à ce premier mode de réalisation de l'invention b est en règle générale compris entre 8 et 15 et est de préférence égal à 11.

Le clavier amharique peut également avantageusement comporter au moins une touche biunivoque annexe correspondant à une consonne principale se présentant sous l'ordre 3 ou sous l'ordre 7.

Selon une caractéristique préférentielle de ce premier mode de réalisation de l'invention, le clavier amharique comporte d'une part un pavé de huit touches muettes correspondant respectivement aux huit ordres et d'autre part un ensemble de cinquante-huit touches biunivoques correspondant à cinquante-huit caractères.

Cet ensemble de cinquante-huit touches biunivoques comporte :
- un premier groupe de dix-sept touches correspondant à dix-sept consonnes principales se présentant sous l'ordre 6,
- un second groupe de seize touches correspondant à seize consonnes principales se présentant sous l'ordre 1,
- un troisième groupe de douze touches correspondant à douze consonnes secondaires se présentant sous l'ordre 6,
- un quatrième groupe de onze touches correspondant à onze consonnes principales se présentant sous l'ordre 4, et
- une première touche annexe correspondant à une consonne principale se présentant sous l'ordre 3 ainsi qu'une seconde touche annexe correspondant à une consonne principale se présentant sous l'ordre 7.

Conformément au premier mode de réalisation de l'invention les touches de cet ensemble de cinquante-huit touches biunivoques peuvent avantageusement être réparties sur quatre rangées de touches, les touches de chacun des groupes de touches étant rassemblées sur ces rangées de façon à constituer des blocs de touches respectivement contigus les uns aux autres.

A titre d'exemple, le clavier amharique conforme au premier mode de réalisation de l'invention peut avantageusement comporter en allant de la gauche vers la droite :
- un bloc correspondant au second groupe de touches,
- un bloc correspondant au quatrième groupe de touches,
- un bloc correspondant au premier groupe de touches et
- un bloc correspondant au troisième groupe de touches.

Les touches muettes du pavé de touches peuvent être quant à elles avantageusement rassemblées en bas à droite du clavier amharique.

Il est à noter que dans un tel clavier amharique, des touches annexes peuvent être incorporées entre deux blocs de touches contigus sur la rangée de touches inférieure.

Ce clavier peut en outre également comporter d'autres touches annexes telles qu'en particulier des touches de ponctuation.

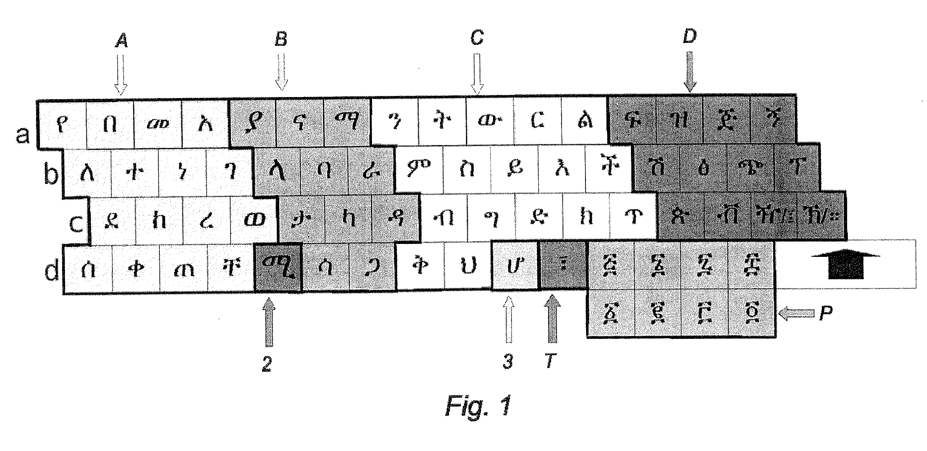

Un clavier amharique correspondant au premier mode de réalisation de l'invention est représenté sur la figure 1.

Selon la figure 1, le clavier amharique comporte essentiellement un pavé P de huit touches muettes positionné en bas à droite de ce clavier, ainsi qu'un ensemble de cinquante-huit touches biunivoques 1 réparties sur quatre rangées a, b, c et d et qui correspondent respectivement à cinquante-huit caractères de l'écriture amharique.

Les touches muettes correspondent respectivement aux huit ordres de l'écriture amharique

L'ensemble de cinquante-huit touches biunivoques 1 se décompose en quatre blocs de touches A, B, C et D en allant de la partie gauche à la partie droite du clavier et en deux touches annexes 2 et 3.

Le bloc A est constitué par un groupe de seize touches biunivoques 1 correspondant à seize consonnes principales se présentant sous l'ordre 1.

Le bloc B est constitué par un groupe de onze touches biunivoques 20 correspondant à onze consonnes principales se présentant sous l'ordre 4.

Le bloc C est constitué par un groupe de dix-sept touches biunivoques 1 correspondant à dix-sept consonnes principales se présentant sous l'ordre 6.

Le bloc D est constitué par un groupe de douze touches biunivoques 20 correspondant aux douze consonnes secondaires se présentant toutes sous l'ordre 6.

La touche 2 correspond à une consonne principale se présentant sous l'ordre 3 tandis que la touche 3 correspond à une consonne principale se présentant sous l'ordre 7.

Le clavier comporte en outre une touche de ponctuation T.

Un clavier ayant une telle géométrie correspond à un compromis très avantageux pour satisfaire à deux exigences à priori contradictoires consistant à permettre d'obtenir une vitesse de frappe très élevée en imprimant une grande proposition de caractères en n'actionnant qu'une seule touche.

Ce clavier permet en effet d'imprimer la totalité des caractères d'un texte en écriture amharique :
- en n'actionnant qu'une seule touche pour 78,89 % des occurrences,
- en actionnant une touche d'ordre muette puis une touche biunivoque c'est-à-dire successivement deux touches pour 21,11 % des occurrences, à savoir une touche biunivoque correspondant à l'une des dix-sept consonnes principales pour 16,18 % des occurrences et une touche biunivoque correspondant à l'une des douze consonnes secondaires pour 4,93 % des occurrences.

En complément de l'étude statistique susmentionnée, l'analyse de la langue et de l'écriture amharique a dans un second temps été complétée et affinée et on s'est ainsi rendu compte que cette langue comprend également intrinsèquement huit voyelles ayant chacune une sonorité propre et pouvant être associées aux huit ordres, et que la consonne principale qui apparait à la ligne 13 de l'annexe 1 bis (a) correspond en fait aux sonorités propres de ces voyelles et peut donc être supprimée.

Il résulte donc de cette analyse affinée que sur le tableau des consonnes figurant en annexe 1 bis la treizième ligne peut être supprimée de sorte que l'on peut considérer que l'écriture amharique comporte en fait huit voyelles et non pas vingt-neuf mais vingt-huit consonnes à savoir seize consonnes principales et douze consonnes secondaires pouvant chacune se présenter sous huit ordres assimilables aux huit voyelles.

Il résulte également de cette analyse affinée que dans le tableau figurant en annexe 3, les caractères de rang 10 et 18 qui correspondent à la « consonne » figurant à la treizième ligne de l'annexe 1 bis peuvent également être supprimés.

A partir de cette analyse, on a eu l'idée selon un second mode de réalisation, préférentiel, de l'invention de simplifier le clavier amharique correspondant au premier mode de réalisation de l'invention et de concevoir un clavier amharique optimisé basé à sa partie centrale sur le clavier QWERTY et comportant à ce niveau un pavé de quarante-quatre touches biunivoques correspondant toutes à l'une des seize consonnes principales ainsi définies se présentant sous un ordre donné.

Ce clavier optimisé comporte en outre d'une part en partie gauche un pavé de huit touches muettes correspondant aux huit voyelles ou aux huit ordres, et d'autre part en partie droite un pavé de douze touches biunivoques correspondant aux douze consonnes secondaires se présentant sous l'ordre 6.

Dans un tel clavier optimisé, le double actionnement de l'une des touches muettes entraine l'impression de la voyelle elle-même dont la sonorité figure sur la touche, alors que l'actionnement de l'une des touches muettes préalablement à celui d'une touche biunivoque correspondant à une consonne principale ou à une consonne secondaire entraine l'impression de cette consonne principale ou secondaire sous l'ordre correspondant à cette touche muette.

Conformément à ce second mode de réalisation préférentiel de l'invention, pour faire en sorte que le pavé central du clavier corresponde au clavier QWERTY qui comporte quarante-quatre touches, on a analysé le tableau figurant en annexe 3 et décidé que sur ce pavé, chacune des consonnes principales devait apparaitre sur au moins deux touches biunivoques, ce sous au moins deux ordres différents.

On a ainsi été amené à supprimer parmi les quarante-sept premiers caractères de ce tableau, outre les caractères 10 et 18 qui correspondent à la « consonne principale » apparaissant à la 13^{ème} ligne de l'annexe 1 bis et donc à deux voyelles, le caractère 46 qui correspond en fait à la première consonne secondaire.

Par suite, selon ce second mode de réalisation préférentiel, l'invention concerne un dispositif du type susmentionné réalisé en admettant que l'une des vingt-neuf consonnes principales de l'écriture amharique représente en fait huit voyelles respectivement associées à l'un des huit ordres de sorte que cette écriture comporte huit voyelles et vingt-huit consonnes, à savoir seize consonnes principales et douze consonnes secondaires pouvant chacune se présenter sous huit ordre assimilables aux huit voyelles.

Un tel dispositif est caractérisé en ce que le clavier amharique comporte :
- un pavé central basé sur le clavier QWERTY et comportant quarante-quatre touches biunivoques correspondant chacune à une consonne principale se présentant sous un ordre donné, chacune des seize consonnes principales apparaissant au moins deux fois ce sous deux ordres différents dans ce pavé central,
- à la partie droite du pavé central, un pavé de douze touches biunivoques correspondant respectivement aux douze consonnes secondaires apparaissant sous l'ordre 6, et
- à la partie gauche du pavé central un pavé de huit touches muettes correspondant respectivement aux huit ordres et aux huit voyelles et respectivement repérées par les sonorités de ces voyelles.

Il est à noter que dans ce clavier amharique correspondant au second mode de réalisation préférentiel de l'invention, le double actionnement de l'une des touches muettes entraine l'impression de la voyelle associée tandis que l'actionnement de l'une de ces touches muettes préalablement à celui d'une touche biunivoque correspondant à une consonne principale ou à une consonne secondaire entraine l'impression de cette consonne principale ou secondaire sous l'ordre correspondant à cette touche muette.

Selon ce second mode de réalisation de l'invention, les touches biunivoques du pavé central, les touches biunivoques du pavé droit et les touches muettes du pavé gauche sont réparties sur quatre rangées de façon à obtenir une configuration similaire à celle d'un clavier QWERTY.

Selon une caractéristique préférentielle de ce second mode de réalisation de l'invention, le pavé central comporte en allant de la gauche vers la droite trois blocs de touches respectivement contigus les uns aux autres, à savoir :
- un bloc de quinze touches biunivoques correspondant à quinze consonnes principales se présentant sous l'ordre 1,
- un bloc de onze touches biunivoques correspondant à onze consonnes principales se présentant sous l'ordre 4, et
- un bloc de seize touches biunivoques correspondant aux seize consonnes principales se présentant sous l'ordre 6.

Il est à noter que dans ce clavier le bloc droit du pavé central est situé au voisinage du pavé droit des douze touches biunivoques correspondant aux consonnes secondaires et que vingt-huit touches biunivoques correspondant respectivement aux vingt-huit consonnes de l'écriture amharique se présentant sous l'ordre 6 sont rassemblées à la partie droite de ce clavier.

Une telle configuration est de nature à faciliter notablement l'utilisation de ce clavier.

Selon une autre caractéristique de ce second mode de réalisation de l'invention le pavé central comporte également une première touche biunivoque annexe correspondant à une consonne principale se présentant sous l'ordre 3 ainsi qu'une seconde touche biunivoque annexe correspondant à une consonne principale se présentant sous l'ordre 7.

Dans un tel clavier amharique correspondant au second mode de réalisation préférentiel de l'invention, les touches annexes peuvent avantageusement être positionnées sur la ligne supérieure et sur la ligne inférieure de ce clavier.

D'autres touches annexes peuvent, bien entendu, être incorporées à ce clavier sans pour cela sortir du cadre de l'invention.

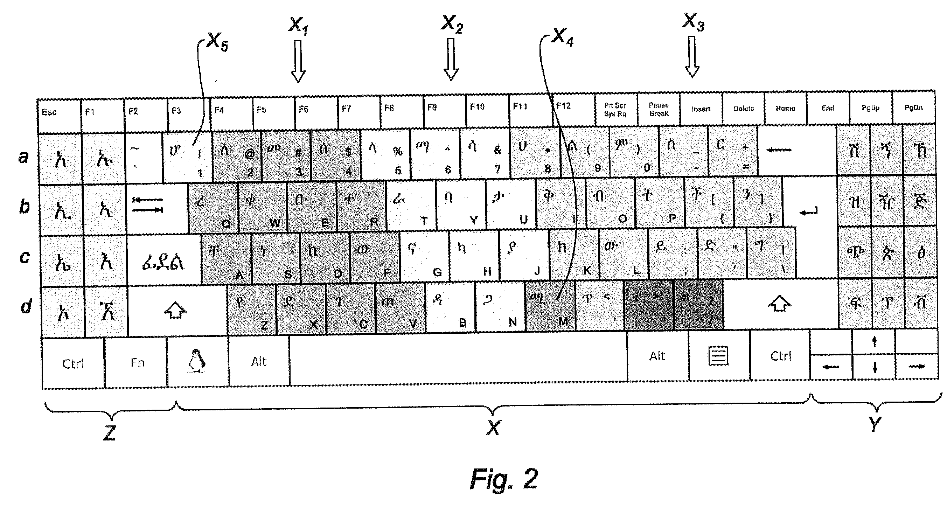

Un clavier amharique correspondant au second mode de réalisation, préférentiel, de l'invention est représenté sur la figure 2.

Selon la figure 2, le clavier amharique comporte un ensemble de touches distribuées sur quatre rangées a ; b ; c et d.

Ces touches sont plus précisément réparties sur un pavé central X basé sur le clavier QWERTY, sur un pavé droit Y et sur un pavé gauche Z.

Le pavé central comprend quarante-quatre touches biunivoques correspondant chacune à une consonne principale se présentant sous un ordre donné dont la répartition sera décrite plus en détail dans la suite de cet exposé.

Le pavé droit Y comprend douze touches biunivoques qui correspondent respectivement aux consonnes secondaires apparaissant sous l'ordre 6.

Le pavé gauche Z comprend quant à lui huit touches muettes qui correspondent respectivement aux huit ordres et aux huit voyelles de la langue amharique.

Ces touches sont repérées par la sonorité de ces voyelles.

Le pavé central X est conçu de sorte que chacune de seize consonnes principales de l'écriture amharique y apparaisse au moins deux fois, ce sous deux ordres différents.

Ce pavé central X comporte plus précisément en allant de la gauche vers la droite trois blocs de touches X1, X2, X3 respectivement contigus les uns aux autres.

Le bloc de gauche X1 comprend quinze touches biunivoques qui correspondent à quinze consonnes principales se présentant sous l'ordre 1.

Le bloc central X2 comprend onze touches biunivoques qui correspondent à onze consonnes principales se présentant sous l'ordre 4.

Le bloc de droite X3 comprend quant à lui seize touches biunivoques qui correspondent respectivement aux seize consonnes principales se présentant sous l'ordre 6.

Compte tenu de cette configuration le bloc de droite X3 et le pavé droit Y sont voisins et renferment vingt-huit touches correspondant respectivement aux dix-huit consonnes principales de l'alphabet amharique se présentant toutes sous l'ordre 6.

En plus des touches susmentionnées, le pavé central X du clavier amharique comporte une première touche biunivoque annexe X4 qui correspond à une consonne principale se présentant sous l'ordre 3, située sur la ligne inférieure b ainsi qu'une seconde touche biunivoque annexe X5 située sur la ligne supérieure a et correspondant à une consonne principale se présentant sous l'ordre 7.

Il est à noter que les modes de réalisation représentés sur les figures 1 et 2 ne sont mentionnés qu'à titre d'exemple et n'ont aucun caractère limitatif de l'invention.

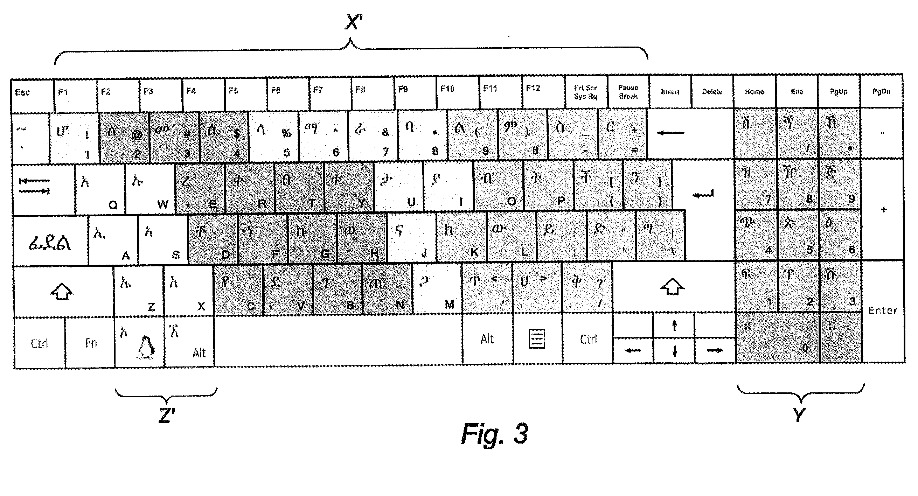

En particulier, la figure 3 représente un mode de réalisation alternatif d'un clavier amharique dans lequel le pavé de voyelles Z' est inséré dans le pavé QWERTY X' des consonnes principales et le nombre de touches correspondant à ces consonnes principales est diminué de 44 à 40.

### Annexe 1

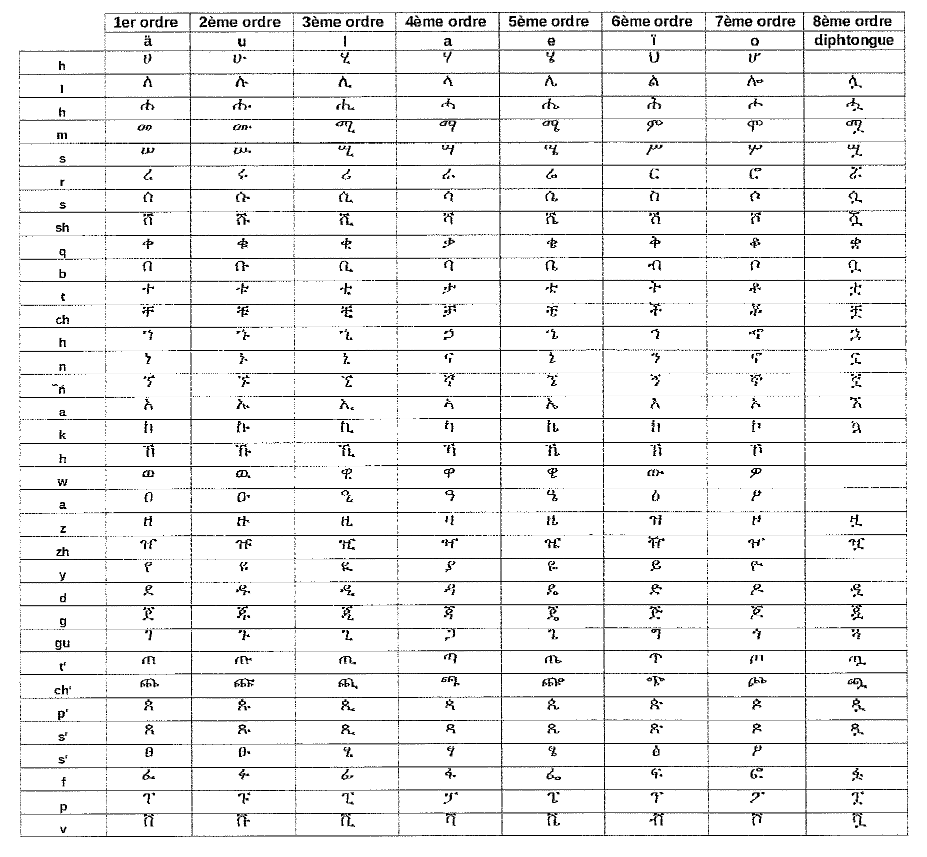

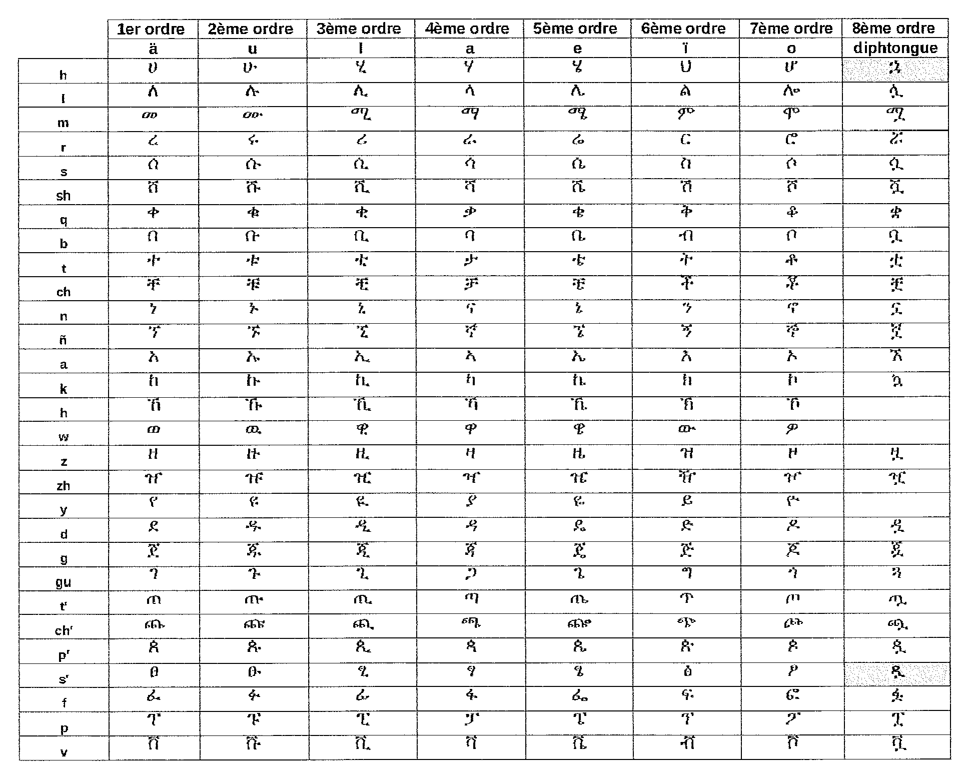

### Annexe 2

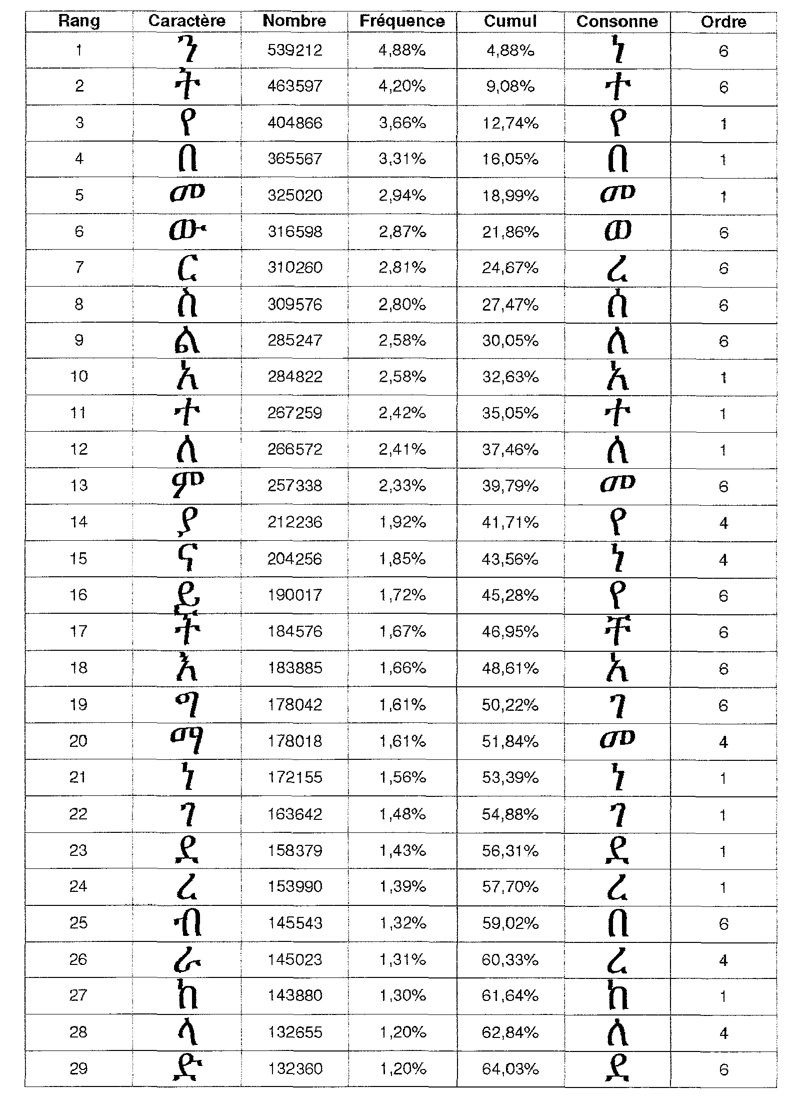

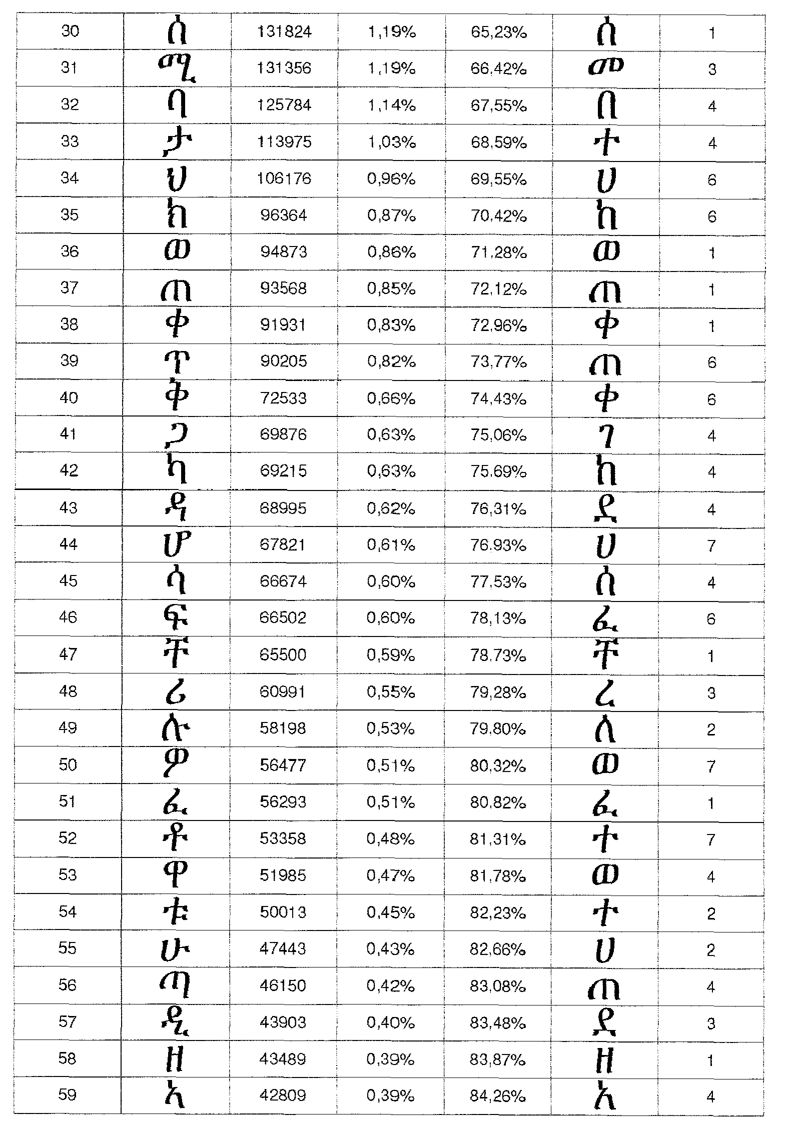

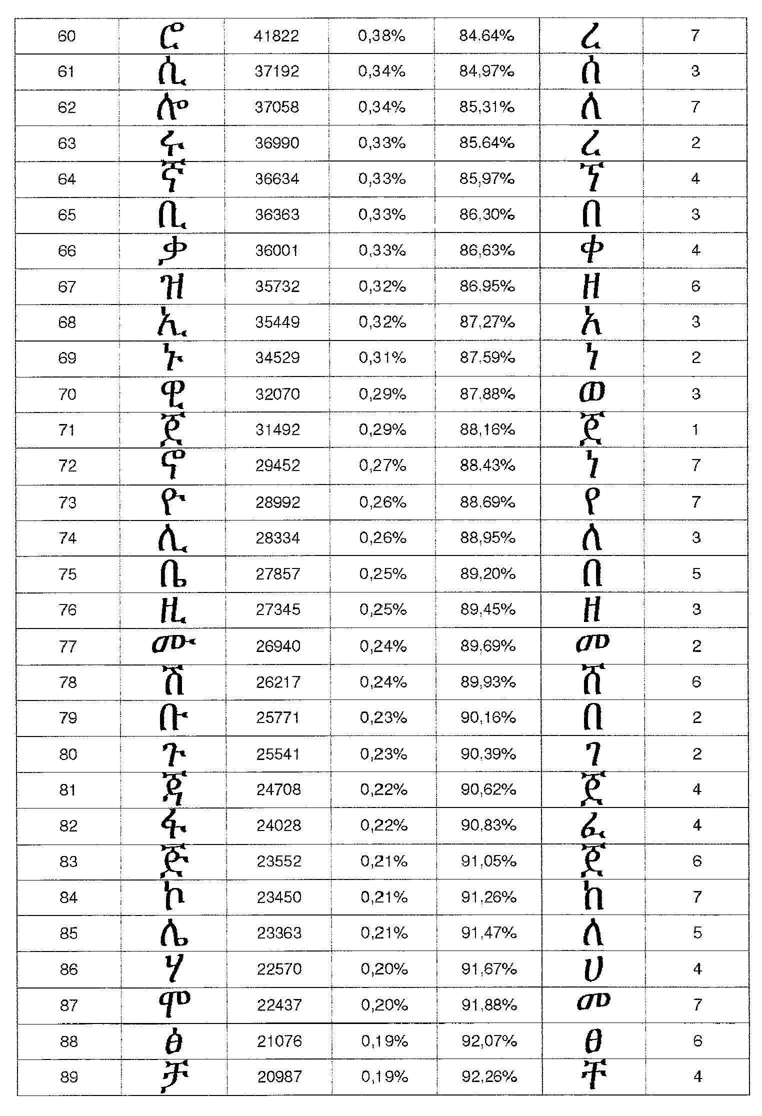

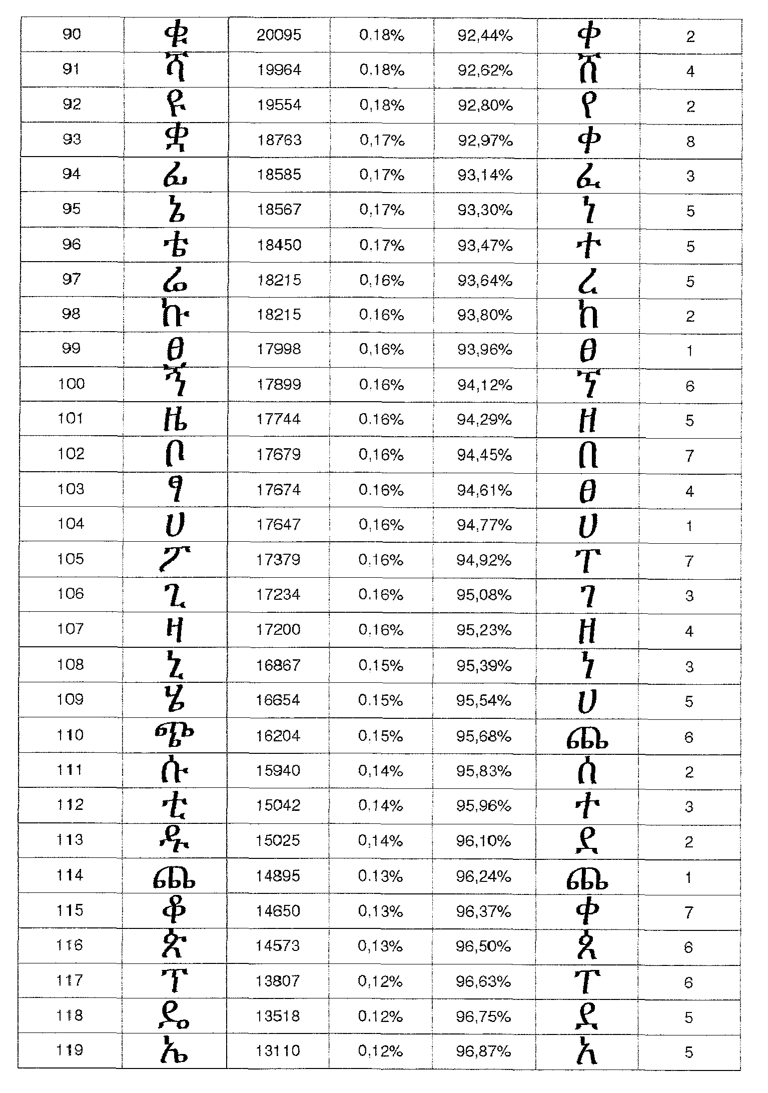

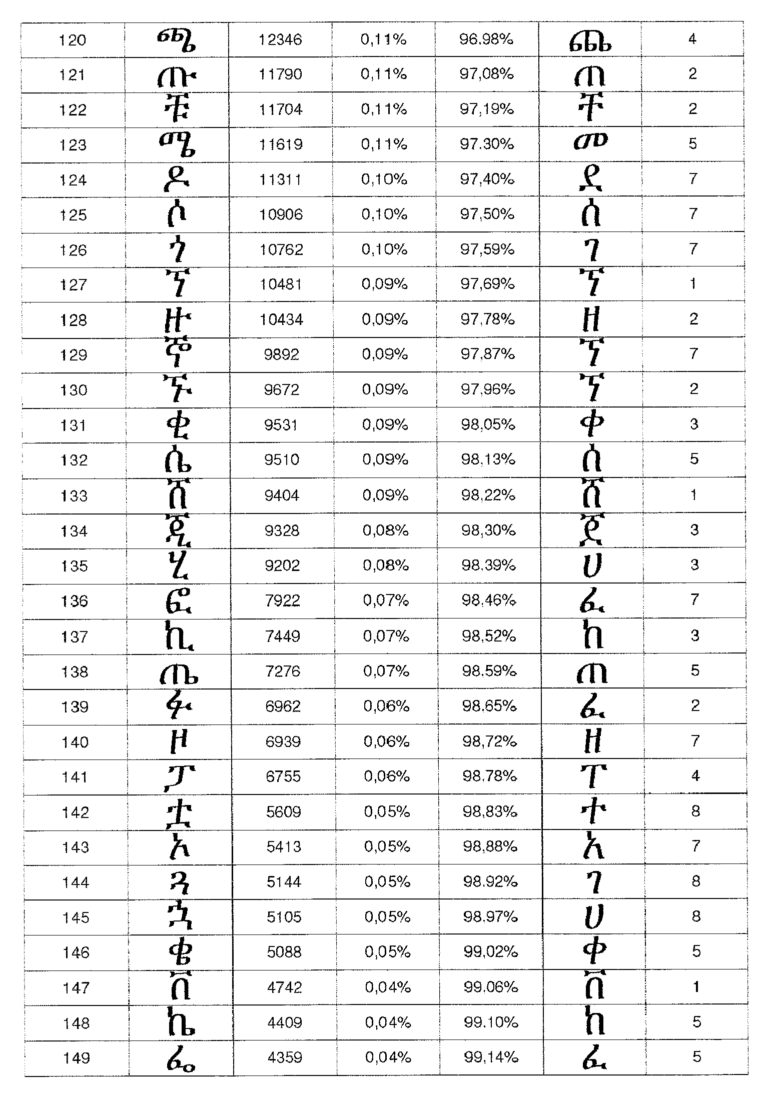

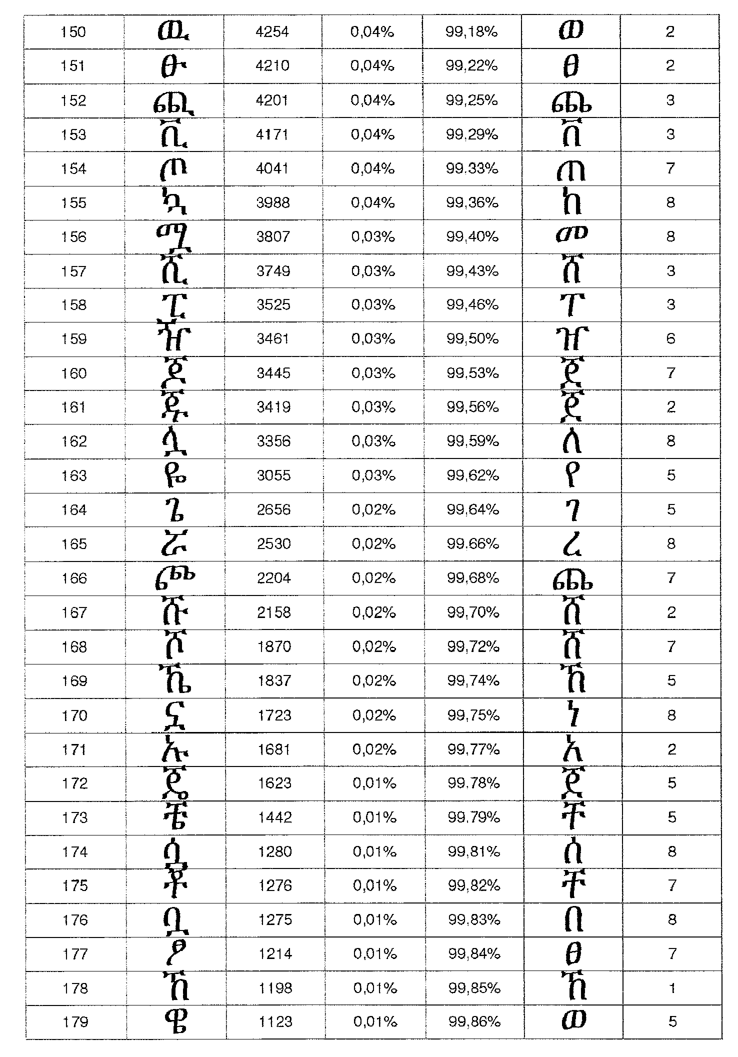

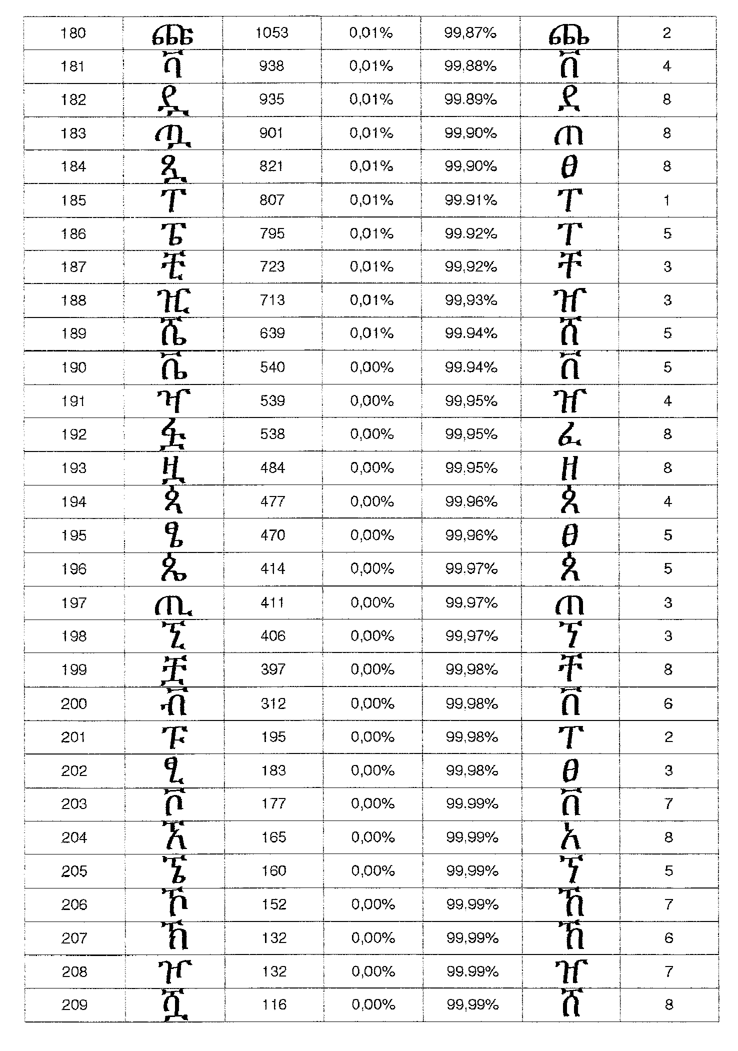

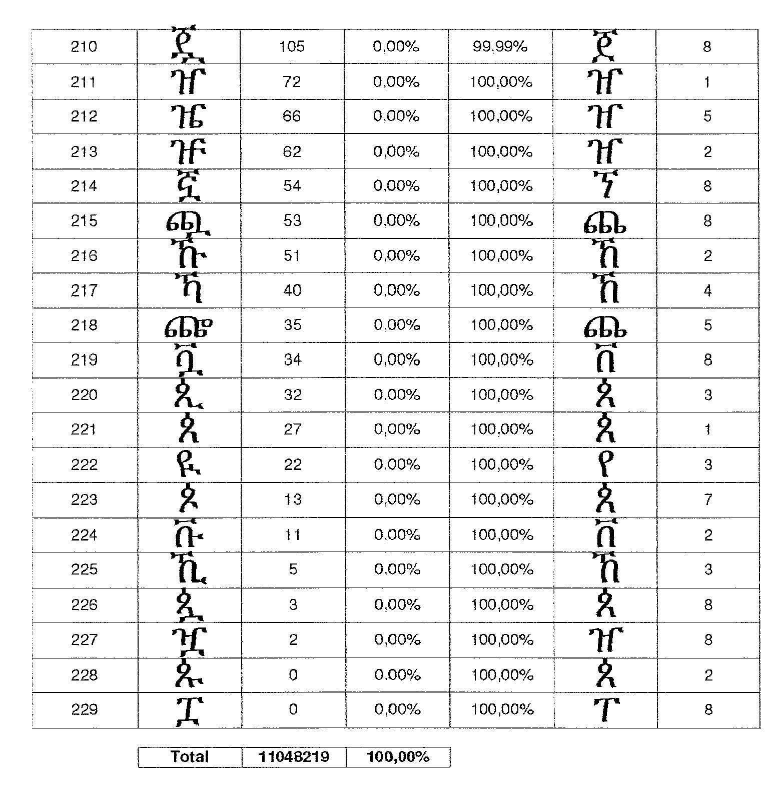

### Annexe 3

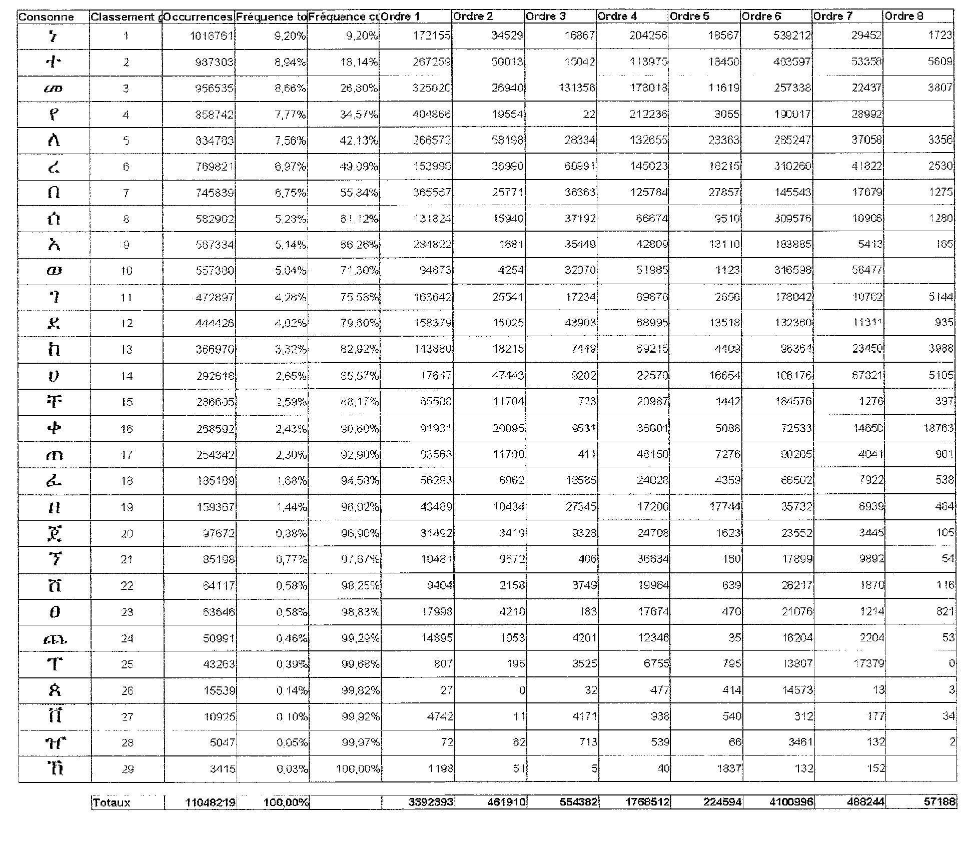

## Revendications

1. Dispositif permettant de faciliter l'enseignement de la langue amharique et d'en normaliser l'écriture qui comporte schématiquement vingt-neuf consonnes pouvant se présenter sous huit ordres, ce dispositif étant constitué par un clavier informatique comportant un ensemble de touches, et l'actionnement de l'une de ces touches entraînant la transmission à un ordinateur d'un signal codé spécifique permettant l'impression d'un caractère alphanumérique associé à celle-ci,
**caractérisé en ce que**
le clavier amharique comporte :
- un premier groupe de n touches biunivoques correspondant aux n consonnes les plus fréquentes ou consonnes principales se présentant sous l'ordre 6,
- un second groupe de a touches biunivoques, avec a ≤ n correspondant respectivement à a consonnes principales se présentant sous l'ordre 1,
- un troisième groupe de touches biunivoques correspondant respectivement aux consonnes autres que les consonnes principales ou consonnes secondaires se présentant sous l'ordre 6, et
- un pavé de huit touches muettes correspondant respectivement aux huit ordres, l'actionnement de l'une des touches muettes de ce pavé préalablement à celui d'une touche biunivoque correspondant à une consonne principale ou à une consonne secondaire entraînant l'impression de cette consonne principale ou secondaire sous l'ordre correspondant à cette touche muette.

2. Dispositif conforme à la revendication 1,
**caractérisé en ce que**
n est compris entre 15 et 20 et est de préférence égal à 17, et a est compris entre 12 et 20 et est de préférence égal à 16.

3. Dispositif conforme à l'une quelconque des revendications 1 et 2, **caractérisé en ce que**
le clavier amharique comporte un quatrième groupe de d touches biunivoques avec b ≤ a correspondant respectivement à b consonnes principales se présentant sous l'ordre 4, b étant compris entre 8 et 15 et étant de préférence égal à 11.

4. Dispositif conforme à l'une quelconque des revendications 1 à 3, **caractérisé en ce que**
le clavier amharique comporte :
- d'une part un pavé de huit touches muettes correspondant respectivement aux huit ordres, et
- d'autre part un ensemble de cinquante-huit touches biunivoques correspondant à cinquante-huit caractères à savoir :
* un premier groupe de dix-sept touches correspondant à dix-sept consonnes principales se présentant sous l'ordre 6,
* un second groupe de seize touches correspondant à seize consonnes principales se présentant sous l'ordre 1,
* un troisième groupe de douze touches correspondant à douze consonnes secondaires se présentant sous l'ordre 6,
* un quatrième groupe de onze touches correspondant à onze consonnes principales se présentant sous l'ordre 4, et
* une première touche annexe correspondant à une consonne principale se présentant sous l'ordre 3 ainsi qu'une seconde touche annexe correspondant à une consonne principale se présentant sous l'ordre 7.

5. Dispositif conforme à la revendication 1, réalisé en admettant que l'une des vingt-neuf consonnes principales de l'écriture amharique représente huit voyelles respectivement associées à l'un des huit ordres de sorte que cette écriture comporte huit voyelles et vingt-huit consonnes à savoir seize consonnes principales et douze consonnes secondaires pouvant chacune se présenter sous huit ordres assimilables aux huit voyelles,
**caractérisé en ce que**
le clavier amharique comporte :
- un pavé central basé sur le clavier QWERTY et comportant quarante-quatre touches biunivoques correspondant chacune à une consonne principale se présentant sous un ordre donné, chacune des seize consonnes principales apparaissant au moins deux fois dans ce pavé central,
- à la partie droite du pavé central, un pavé de douze touches biunivoques correspondant respectivement aux consonnes secondaires apparaissant sous l'ordre 6, et
- à la partie gauche du pavé central, un pavé de huit touches muettes correspondant respectivement aux huit ordres et aux huit voyelles et respectivement repérées par les sonorités de ces voyelles, le double actionnement de l'une de ces touches muettes entrainant l'impression de cette voyelle tandis que l'actionnement de l'une des touches muettes préalablement à celui d'un touche biunivoque correspondant à une consonne principale ou à une consonne secondaire entraine l'impression de cette consonne principale ou secondaire sous l'ordre correspondant à cette touche muette.

6. Dispositif conforme à la revendication 5,
**caractérisé en ce que**
les touches biunivoques du pavé central, les touches biunivoques du pavé droit et les touches biunivoques du pavé gauche sont réparties sur quatre rangées.

7. Dispositif conforme à l'une quelconque des revendications 5 et 6, **caractérisé en ce que**
le pavé central comporte, en allant de la gauche vers la droite, trois blocs de touches respectivement contigus les uns aux autres, à savoir :
- un bloc de quinze touches biunivoques correspondant à quinze consonnes principales se présentant sous l'ordre 1,
- un bloc de onze touches biunivoques correspondant à onze consonnes principales se présentant sous l'ordre 4, et
- un bloc de seize touches biunivoques correspondant aux seize consonnes principales se présentant sous l'ordre 6.

8. Dispositif conforme à la revendication 7,
**caractérisé en ce que**
le pavé central comporte une première touche biunivoque annexe correspondant à une consonne principale se présentant sous l'ordre 3 ainsi qu'une seconde touche biunivoque annexe correspondant à une consonne principale se présentant sous l'ordre 7.
